(19) Europäisches Patentamt
European Patent Office
Office européen des brevets

(11) **EP 3 566 296 B1**

(12) **EUROPÄISCHE PATENTSCHRIFT**

(45) Veröffentlichungstag und Bekanntmachung des Hinweises auf die Patenterteilung:
**14.10.2020  Patentblatt 2020/42**

(21) Anmeldenummer: **17709396.0**

(22) Anmeldetag: **28.02.2017**

(51) Int Cl.:
**H02M 7/483** (2007.01)     **H02M 1/00** (2006.01)

(86) Internationale Anmeldenummer:
**PCT/EP2017/054612**

(87) Internationale Veröffentlichungsnummer:
**WO 2018/157912 (07.09.2018 Gazette 2018/36)**

(54) **VERFAHREN UND ANORDNUNG ZUM BETREIBEN EINER ELEKTRISCHEN EINRICHTUNG**

METHOD AND ARRANGEMENT FOR OPERATING AN ELECTRICAL DEVICE

PROCÉDÉ ET ENSEMBLE POUR FAIRE FONCTIONNER UN DISPOSITIF ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.11.2019  Patentblatt 2019/46**

(73) Patentinhaber: **Siemens Aktiengesellschaft**
**80333 München (DE)**

(72) Erfinder:
 • **FEHR, Hendrik**
   **01159 Dresden (DE)**
 • **GENSIOR, Albrecht**
   **01277 Dresden (DE)**
 • **KUBERA, Sascha**
   **91325 Adelsdorf (DE)**
 • **ALVAREZ VALENZUELA, Rodrigo Alsonso**
   **90408 Nürnberg (DE)**

(56) Entgegenhaltungen:
EP-A1- 2 908 424      EP-A1- 3 220 530
WO-A1-2011/150964    WO-A1-2016/082878

 • **YARAMASU VENKATA ET AL: "Predictive Control of a Three-Level Boost Converter and an NPC Inverter for High-Power PMSG-Based Medium Voltage Wind Energy Conversion Systems", IEEE TRANSACTIONS ON POWER ELECTRONICS, INSTITUTE OF ELECTRICAL AND ELECTRONICS ENGINEERS, USA, Bd. 29, Nr. 10, 1. Oktober 2014 (2014-10-01), Seiten 5308-5322, XP011550002, ISSN: 0885-8993, DOI: 10.1109/TPEL.2013.2292068 [gefunden am 2014-06-02]**
 • **SMITH J O ET AL: "A FLEXIBLE SAMPLING-RATE CONVERSION METHOD", INTERNATIONAL CONFERENCE ON ACOUSTICS, SPEECH & SIGNAL PROCESSING. ICASSP. SAN DIEGO, MARCH 19 - 21, 1984; [INTERNATIONAL CONFERENCE ON ACOUSTICS, SPEECH & SIGNAL PROCESSING. ICASSP], NEW YORK, IEEE, US, Bd. 2, 1. März 1984 (1984-03-01), Seiten 19.4.01-19.4.04, XP000946290,**
 • **KUBERA SASCHA ET AL: "Control of switching frequency for modular multilevel converters by a variable hysteresis band modulation", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION, 5. September 2016 (2016-09-05), Seiten 1-7, XP032985414, DOI: 10.1109/EPE.2016.7695697 [gefunden am 2016-10-25] in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum Betreiben einer elektrischen Einrichtung unter Berücksichtigung eines durch Eingangssollwerte gebildeten Eingangsdatenstroms, dessen Eingangssollwerte eine zeitliche Aktualisierungsrate aufweisen.

Aus der Veröffentlichung "Control of Switching Frequency for Modular Multilevel Converters by a Variable Hysteresis Band Modulation" (Sascha Kubera, Rodrigo Alvarez, Jörg Dorn, 18th European Conference on Power Electronics and Applications EPE'16 ECCE Europe, 5.-9. September 2016, Karlsruhe, Germany) ist ein Verfahren zum Betreiben eines modularen Multilevelumrichters, der mindestens ein Konvertermodul mit elektrisch in Reihe geschalteten Submodulen aufweist, bekannt. Bei dem vorbekannten Verfahren wird die Spannung an dem mindestens einen Konvertermodul unter Bildung von Spannungsistwerten gemessen. Die Spannungsistwerte werden mit Eingangssollwerten in Form von Spannungssollwerten verglichen und die Schalter der Submodule werden ein- oder ausgeschaltet, wenn die Spannungsistwerte von den Spannungssollwerten über ein durch ein vorgegebenes Hystereseband definiertes Maß voneinander abweichen.

Aus der europäischen Patentanmeldung EP 2 908 424 A1 ist ein Verfahren zum Steuern eines modularen Multilevelumrichters bekannt. Dabei werden verschiedene Taktraten verwendet. Insbesondere werden mittels eines Digital-Digital-Umsetzers Messwerte mit einer niedrigen Taktrate in Werte mit einer höheren Taktrate gewandelt.

Die internationale Patentanmeldung WO 2011/150964 A1 offenbart eine Konverterstation mit einem modularen Multilevelumrichter. Diese Konverterstation weist eine Hauptsteuereinheit sowie eine Vielzahl von Zellsteuereinheiten für die Zellen des Multilevelumrichters auf. Die Zellsteuereinheiten weisen jeweils eine höhere Datenverarbeitungsrate auf als die Hauptsteuereinheit. Ein Referenz-Spannungssignal wird von einer der Zellsteuereinheiten zu einer höheren Datenrate konvertiert.

Aus dem Artikel "Predictive Control of a Three-Level Boost Converter and an NPC Inverter for High-Power PMSG-Based Medium Voltage Wind Energy Conversion Systems" von Yaramasu Venkata et al, IEEE Transactions on Power Electronics, Institute of Electrical and Electronics Engineers, Bd. 29, Nr. 10, 1. Oktober 2014, Seiten 5308-5322 ist bekannt, eine Modellvorhersage-Strategie zu verwenden, um ein gesamtes System zu regeln. Dabei werden zeitdiskrete Modelle von leistungselektronischen Wandlern zur Vorhersage des zukünftigen Verhaltens von Regelgrößen verwendet.

Aus der internationalen Patentanmeldung WO 2016/082878 A1 sind ein Verfahren und eine Anordnung zum Dämpfen von Spannungs-Oberschwingungen in einem Multilevelumrichter bekannt.

Der Erfindung liegt die Aufgabe zugrunde, ein Verfahren anzugeben, mit dem sich elektrische Einrichtungen, wie beispielsweise Umrichter, insbesondere Multilevelumrichter, besser als mit bisherigen Verfahren ansteuern lassen.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass mit dem Eingangsdatenstrom ein verdichteter Ausgangsdatenstrom gebildet wird, dessen zeitliche Aktualisierungsrate an Ausgangssollwerten größer als die zeitliche Aktualisierungsrate des Eingangsdatenstroms ist, und die Ansteuerung von Komponenten der Einrichtung in Abhängigkeit von den Ausgangssollwerten des Ausgangsdatenstroms erfolgt.

Ein wesentlicher Vorteil des erfindungsgemäßen Verfahrens besteht darin, dass die Ansteuerung der elektrischen Einrichtung auf der Basis von Sollwerten mit frei wählbarer Aktualisierungsrate erfolgen kann, also unabhängig von der Aktualisierungsrate des Eingangsdatenstroms.

Im Rahmen der Bildung des Ausgangsdatenstroms wird zwischen zwei aufeinander folgenden Eingangssollwerten des Eingangsdatenstroms vorzugsweise jeweils mindestens ein Zusatzsollwert eingefügt. Durch das Einfügen von Zusatzsollwerten kann der verdichtete Ausgangsdatenstrom ohne bzw. ohne relevante zeitliche Verzögerung der Eingangssollwerte des Eingangsdatenstroms erzeugt werden; dies ist insbesondere im Falle einer Ansteuerung eines Umrichters von großem Vorteil.

Die zeitliche Aktualisierungsrate der Ausgangssollwerte beträgt vorzugsweise ein ganzzahliges Vielfaches der zeitlichen Aktualisierungsrate der Eingangssollwerte.

Die Zusatzwerte werden bevorzugt mit den Eingangssollwerten unter Einbezug eines Extrapolations- und/oder Prädiktionsverfahrens gebildet.

Als besonders vorteilhaft wird es angesehen, wenn als elektrische Einrichtung ein modularer Multilevelumrichter betrieben wird, der mindestens ein Konvertermodul mit elektrisch in Reihe geschalteten Submodulen aufweist, wobei jedes Submodul jeweils mindestens zwei Schalter und einen Energiespeicher umfasst, und die Ansteuerung der Submodule des mindestens einen Konvertermoduls anhand der Ausgangssollwerte des Ausgangsdatenstroms erfolgt.

Im Falle einer Ansteuerung eines Multilevelumrichters ist es vorteilhaft, wenn die Ausgangssollwerte des Ausgangsdatenstroms Spannungssollwerte sind, die Spannung an mindestens einem Konvertermodul unter Bildung von Spannungsistwerten ermittelt wird, die Spannungsistwerte mit den Spannungssollwerten verglichen werden und zumindest einer der Schalter der Submodule umgeschaltet wird, wenn ein in Abhängigkeit von den Differenzwerten zwischen den Spannungsistwerten und den Spannungssollwerten gebildeter Spannungsabweichungswert eine vorgegebene Schwelle erreicht oder überschreitet.

Die Zusatzsollwerte werden bevorzugt jeweils in Abhängigkeit von einer vorgegebenen Anzahl an zeitlich vorherigen Eingangssollwerten des Eingangsdatenstroms gebildet.

Bei einer bevorzugten Ausführungsvariante des Verfahrens ist vorgesehen, dass aus dem Eingangsdatenstrom die Grundschwingung sowie zumindest eine Oberschwingung ermittelt werden und die Zusatzsollwerte in Abhängigkeit von der Amplitude und Phasenlage der Grundschwingung und der mindestens einen Oberschwingung gebildet werden. Bei dieser Ausgestaltung lässt sich eine hohe Aktualisierungsrate bzw. ein hoher Aktualisierungstakt einstellen, ohne dass dadurch ein unerwünschtes Anheben von Rauschanteilen auftritt.

Die Zusatzsollwerte werden bevorzugt in Abhängigkeit von der Amplitude und der Phasenlage der Grundschwingung und der dritten Harmonischen gebildet.

Alternativ oder zusätzlich kann vorgesehen sein, dass aus dem Eingangsdatenstrom Polynomkoeffizienten eines vorgegebenen Polynoms errechnet werden und die Zusatzsollwerte in Abhängigkeit von den Polynomkoeffizienten gebildet werden. Auch bei dieser Ausgestaltung lässt sich eine hohe Aktualisierungsrate bzw. ein hoher Aktualisierungstakt einstellen, ohne dass dadurch ein unerwünschtes Anheben von Rauschanteilen auftritt.

Besonders einfach und vorteilhaft lässt sich der verdichtete Ausgangsdatenstrom bilden, indem anhand des Eingangsdatenstroms von einem vorgegebenen, auf einem oder mehreren Modellparametern basierenden und den Eingangsdatenstrom nachbildenden Signalmodell die Modellparameter quantitativ ermittelt werden, auf der Basis der ermittelten Modellparameter und des Signalmodells ein erstes stufenförmiges Hilfssignal ermittelt wird, dessen Stufenrate der Aktualisierungsrate des Eingangsdatenstroms entspricht, auf der Basis der ermittelten Modellparameter und des Signalmodells ein zweites stufenförmiges Hilfssignal ermittelt wird, dessen Stufenrate der Aktualisierungsrate des verdichteten Ausgangsdatenstroms entspricht, und der verdichtete Ausgangsdatenstrom unter Heranziehung des Eingangsdatenstroms sowie des ersten und zweiten Hilfssignals erzeugt wird.

Bei der letztgenannten Variante ist es außerdem vorteilhaft, wenn von den Eingangssollwerten des Eingangsdatenstroms jeweils ein zeitlich korrespondierender Hilfswert des ersten stufenförmigen Hilfssignals unter Bildung eines ersten Restsignals, dessen Restwertrate der Aktualisierungsrate des Eingangsdatenstrom entspricht, abgezogen wird, mit dem ersten Restsignal durch Datenratenwandlung ein zweites Restsignal gebildet wird, dessen Restwertrate der Aktualisierungsrate des verdichteten Ausgangsdatenstroms entspricht, zu den Restwerten des zweiten Restsignals jeweils ein zeitlich korrespondierender Hilfswert des zweiten stufenförmigen Hilfssignals unter Bildung der Ausgangssollwerte des verdichteten Ausgangsdatenstroms addiert wird.

Darüber hinaus ist eine Verfahrensvariante von Vorteil, bei der anhand des Eingangsdatenstroms von einem vorgegebenen, auf einem oder mehreren Modellparametern basierenden ersten Signalmodell die Modellparameter quantitativ ermittelt werden und auf der Basis der ermittelten Modellparameter, eines modifizierten zweiten Signalmodells, das der zeitlichen Ableitung des ersten Signalmodells entspricht und die ermittelten Modellparameter des ersten Signalmodells nutzt, der verdichtete Ausgangsdatenstrom gebildet wird.

Bei der letztgenannten Variante ist es von Vorteil, wenn das erste Signalmodell als Modellparameter die Amplitude und Phasenlage der Grundschwingung und mindestens einer Oberschwingung des Eingangsdatenstroms aufweist und ein aus der Grundschwingung und der mindestens einen Oberschwingung gebildetes Summensignal beschreibt und das zweite Signalmodell die zeitliche Ableitung des Summensignals beschreibt.

Besonders bevorzugt weist das erste Signalmodell als Modellparameter die Amplitude und Phasenlage der Grundschwingung und der dritten Oberschwingung des Eingangsdatenstroms auf und beschreibt ein aus der Grundschwingung und der dritten Oberschwingung gebildetes Summensignal.

Die Erfindung bezieht sich darüber hinaus auf eine Steuereinrichtung zum Steuern einer elektrischen Einrichtung unter Berücksichtigung eines durch Eingangssollwerte gebildeten Eingangsdatenstroms, dessen Eingangssollwerte eine zeitliche Aktualisierungsrate aufweisen.

Erfindungsgemäß ist bezüglich einer solchen Steuereinrichtung vorgesehen, dass diese derart ausgestaltet ist, dass sie mit dem Eingangsdatenstrom einen verdichteten Ausgangsdatenstrom bildet, dessen zeitliche Aktualisierungsrate an Ausgangssollwerten größer als die zeitliche Aktualisierungsrate des Eingangsdatenstroms ist, und die Ansteuerung von Komponenten der Einrichtung in Abhängigkeit von den Ausgangssollwerten des Ausgangsdatenstroms durchführt.

Bezüglich der Vorteile der erfindungsgemäßen Steuereinrichtung sei auf die obigen Ausführungen im Zusammenhang mit dem erfindungsgemäßen Verfahren verwiesen.

Die Erfindung bezieht sich darüber hinaus auf eine Anordnung mit einer Steuereinrichtung und einem von der Steuereinrichtung angesteuerten Multilevelumrichter.

Darüber hinaus bezieht sich die Erfindung auf einen Multilevelumrichter, der mit einer Steuereinrichtung, wie sie oben beschrieben worden ist, ausgestattet ist.

Die Erfindung wird nachfolgend anhand von Ausführungsbeispielen näher erläutert; dabei zeigen beispielhaft

Figur 1     ein Ausführungsbeispiel für eine erfindungsgemäße Steuereinrichtung zum Steuern einer elektrischen Einrichtung, wobei anhand der Steuereinrichtung gemäß Figur 1 ein erstes Ausführungsbeispiel für die Durchführung des erfindungsgemäßen Verfahrens erläutert wird,

Fig. 2-4     Beispiele für Signalläufe, die während des Betriebs der Steuereinrichtung gemäß Figur 1 auftreten können,

Figur 5     ein zweites Ausführungsbeispiel für eine erfindungsgemäße Steuereinrichtung zum Steuern einer elektrischen Einrichtung, wobei anhand der Steuereinrichtung gemäß Figur 5 ein zweites Ausführungsbeispiel für das erfindungsgemäße Verfahren erläutert wird,

Figur 6     ein drittes Ausführungsbeispiel für eine erfindungsgemäße Steuereinrichtung zum Steuern einer elektrischen Einrichtung, wobei anhand der Steuereinrichtung gemäß Figur 6 ein drittes Ausführungsbeispiel für das erfindungsgemäße Verfahren erläutert wird und

Figur 7     ein Ausführungsbeispiel für einen Multilevelumrichter, der mit einer Steuereinrichtung, beispielsweise einer Steuereinrichtung gemäß den Figuren 1, 5 oder 6, angesteuert wird und/oder ausgestattet ist.

In den Figuren werden der Übersicht halber für identische oder vergleichbare Komponenten stets dieselben Bezugszeichen verwendet.

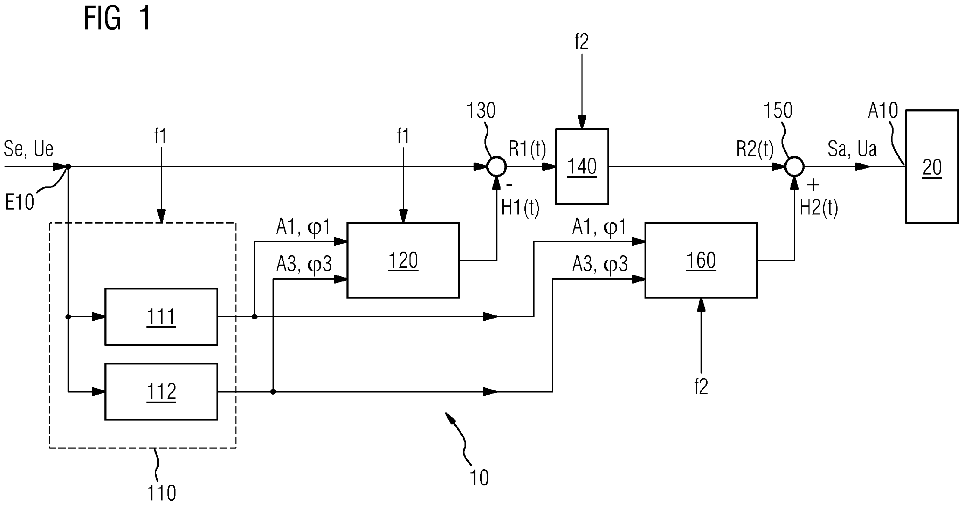

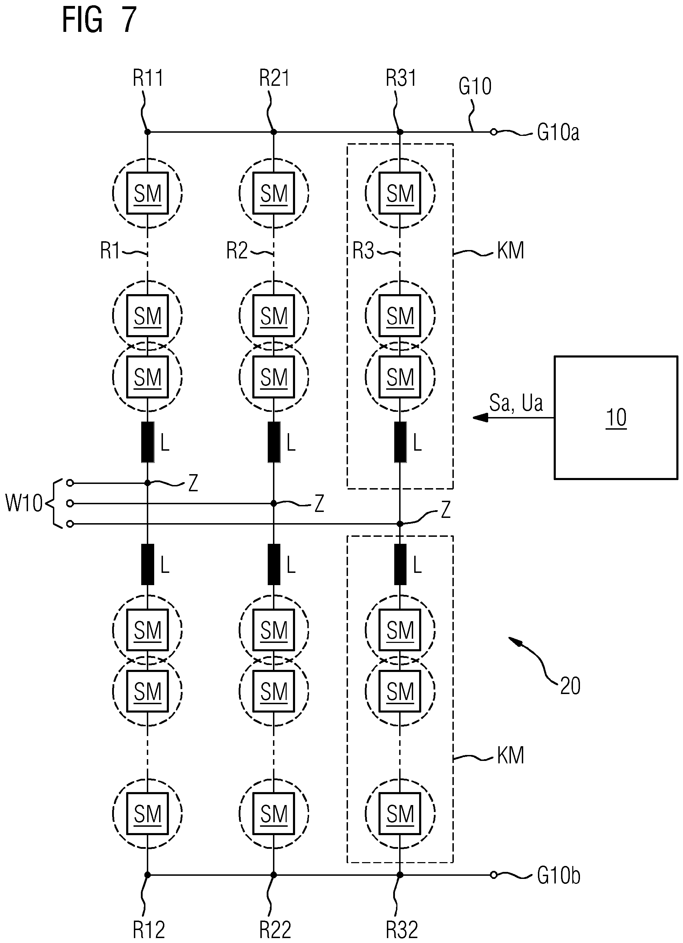

Die Figur 1 zeigt eine Anordnung mit einer Steuereinrichtung 10 zum Steuern einer elektrischen Einrichtung 20. Bei der elektrischen Einrichtung 20 kann es sich um einen Umrichter, beispielsweise einen modularen Multilevelumrichter, handeln, wie er weiter unten im Zusammenhang mit der Figur 7 beispielhaft näher erläutert wird.

Die Steuereinrichtung 10 weist einen Eingang E10 auf, an dem ein Eingangsdatenstrom Se in die Steuereinrichtung 10 eingespeist werden kann. Der Eingangsdatenstrom Se besteht aus Eingangssollwerten Ue, die eine vorgegebene zeitliche Aktualisierungsrate bzw. einen vorgegebenen Aktualisierungstakt, nachfolgend erster Aktualisierungstakt f1 genannt, aufweisen. Mit dem Eingangsdatenstrom Se erzeugt die Steuereinrichtung 10 ausgangsseitig einen verdichteten Ausgangsdatenstrom Sa, der durch Ausgangssollwerte Ua gebildet wird, die eine größere zeitliche Aktualisierungsrate als der Eingangsdatenstrom Se bzw. einen Aktualisierungstakt aufweisen, der höher als der erste Aktualisierungstakt f1 ist und nachfolgend als zweiter Aktualisierungstakt f2 bezeichnet wird.

Bei den Ausgangssollwerten Ua handelt es sich vorzugsweise um Spannungssollwerte, die an einem Konvertermodul (siehe z. B. Bezugszeichen KM in Figur 7) der elektrischen Einrichtung 20 anliegen sollen. Die Spannungssollwerte können mit Spannungsistwerten, die an dem Konvertermodul tatsächlich anliegen, verglichen werden. Vorzugsweise wird zumindest einer der Schalter eines Submoduls des Konvertermoduls umgeschaltet, wenn ein in Abhängigkeit von den Differenzwerten zwischen den Spannungsistwerten und den Spannungssollwerten gebildeter Spannungsabweichungswert eine vorgegebene Schwelle erreicht oder überschreitet.

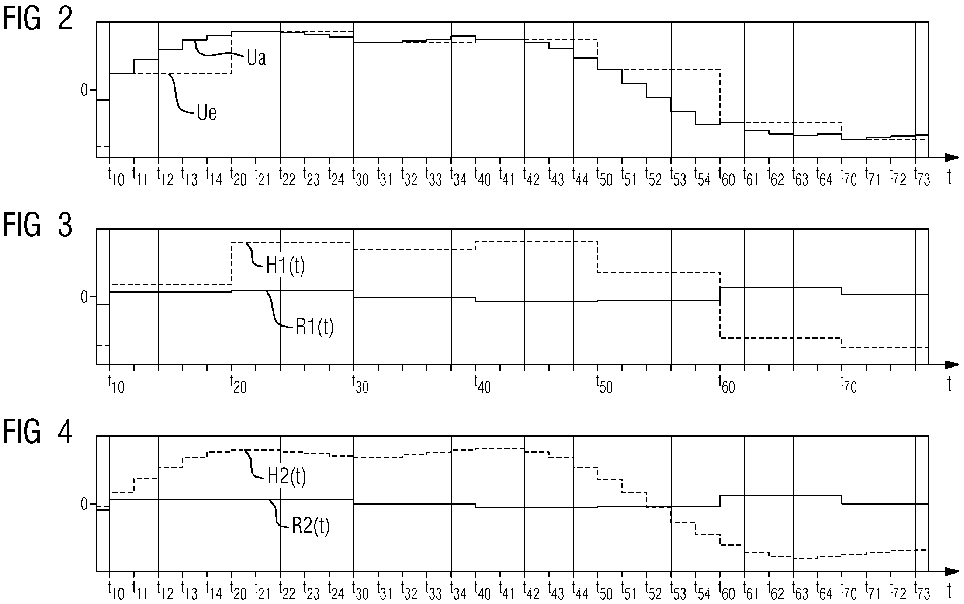

Der Verlauf der Eingangssollwerte Ue bzw. der Verlauf des Eingangsdatenstroms Se ist in der Figur 2 beispielhaft gezeigt. Es lässt sich erkennen, dass die Eingangssollwerte Ue jeweils zu den Zeitpunkten t10, t20, t30, t40, t50, t60 und t70 aktualisiert werden, die durch den ersten Aktualisierungstakt f1 vorgegeben werden.

Die am Eingang E10 der Steuereinrichtung 10 eingespeisten Eingangssollwerte Ue gelangen zu einer Analyseeinrichtung 110, in der ein Signalmodell für den Eingangsdatenstrom Se hinterlegt ist. Bei dem Ausführungsbeispiel gemäß Figur 1 lautet das Signalmodell wie folgt:

$$\mathrm{Um(t) \ = \ A1 \ sin(\omega \ t \ + \ \varphi1) \ + \ A3 \ sin(3\omega \ t \ + \ \varphi3)}$$

wobei

Um(t) das Signalmodell, $\omega$ die Grundschwingung der Eingangssollwerte Ue und die der Ausgangssollwerte Ua, A1 die Amplitude der Grundschwingung des Eingangsdatenstroms Se, $\varphi1$ die Phasenlage der Grundschwingung des Eingangsdatenstroms Se, A3 die Amplitude der dritten Oberschwingung des Eingangsdatenstroms Se und $\varphi3$ die Phasenlage der dritten Oberschwingung des Eingangsdatenstroms Se bezeichnet. A1, A3, $\varphi1$ und $\varphi3$ bilden die Modellparameter des hinterlegten Signalmodells Um(t).

Das Signalmodell Um(t) basiert auf der Annahme bzw. dem Ansatz, dass die Eingangssollwerte Ue von der Grundschwingung und der dritten Oberschwingung dominiert bzw. im Wesentlichen durch diese charakterisiert werden.

Zur Ermittlung der Modellparameter A1 und $\varphi1$ weist die Analyseeinrichtung 110 ein Grundschwingungsbestimmungsmodul 111 auf, das anhand der eingangsseitig eintreffenden Eingangssollwerte Ue des Eingangsdatenstroms Se die Amplitude A1 und Phasenlage $\varphi1$ der Grundschwingung bestimmt.

Zur Ermittlung der Modellparameter A3 und $\varphi3$ weist die Analyseeinrichtung 110 ein Oberschwingungsbestimmungsmodul 112 auf.

Die Modellparameter A1, A3, φ1 und φ3 können beispielsweise durch oder im Rahmen einer Fouriertransformation bestimmt werden.

Die optimalen Modellparameter A1, A3, φ1 und φ3, die den Eingangssollwerten Ue des Eingangsdatenstroms Se bestmöglich entsprechen, können von der Analyseeinrichtung 110 beispielsweise im Rahmen eines Minimierungsverfahren ermittelt werden, insbesondere derart, dass die Abweichung zwischen den eintreffenden Eingangssollwerten Ue und den zeitlich korrespondierenden Werten des Signalmodells Um möglichst klein wird:

$$|Ue(t) - Um(A1, A3, \varphi1, \varphi3, t)| \rightarrow Minimum$$

Die Modellparameter A1, φ1, A3 und φ3 gelangen zu einem nachgeordneten ersten Signalgenerator 120, der auf der Grundlage der Modellparameter und dem Aktualisierungstakt f1 des Eingangsdatenstroms Se ein erstes Hilfssignal H1(t) erzeugt. Das erste Hilfssignal H1(t) gibt - mit der Aktualisierungsrate des Aktualisierungstakts f1 - jeweils den Spannungswert gemäß dem Signalmodell Um(t) aus:

$$H1(t) = A1 \sin(\omega t + \varphi1) + A3 \sin(3\omega t + \varphi3)$$

Das erste stufenförmige Hilfssignal H1(t) des Signalgenerators 120 sowie die Eingangssollwerte Ue des Eingangsdatenstroms Se gelangen zu einem Subtrahierer 130, der die beiden Signale voneinander subtrahiert und ein erstes Restsignal R1(t) erzeugt. Das erste Restsignal R1(t) basiert auf der zeitlichen Aktualisierungsrate bzw. dem zeitlichen Aktualisierungstakt f1 des Eingangsdatenstroms Se. Das erste Restsignal R1(t) beschreibt anschaulich die Signalanteile im Eingangsdatenstrom Se, die nicht der Grundschwingung und nicht der dritten Oberschwingung im Eingangsdatenstrom Se entsprechen.

Die Figur 3 zeigt den Verlauf des ersten stufenförmigen Hilfssignals H1(t) des Signalgenerators 120 sowie den zeitlichen Verlauf des ersten Restsignals R1(t) über der Zeit t; es lässt sich erkennen, dass das erste stufenförmige Hilfssignal H1(t) und das erste Restsignal R1(t) jeweils zu den Zeitpunkten t10, t20, t30,... aktualisiert werden.

Das erste Restsignal R1(t) gelangt zu einem Aktualisierungsratenwandelelement 140, das mit einem zweiten Aktualisierungstakt f2 arbeitet und mit dem ersten Restsignal R1(t) ein zweites Restsignal R2(t) erzeugt. Das zweite Restsignal R2(t) entspricht dem ersten Restsignal R1(t) mit dem Unterschied, dass das zweite Restsignal R2(t) eine höhere Aktualisierungsrate als der Eingangsdatenstrom Se aufweist, nämlich gemäß dem zweiten Aktualisierungstakt f2.

Den zeitlichen Verlauf des zweiten Restsignals R2(t) zeigt die Figur 4. Es lässt sich erkennen, dass der zeitliche Verlauf des zweiten Restsignals R2(t) gemäß Figur 4 dem zeitlichen Verlauf des ersten Restsignals R1(t) gemäß Figur 3 entspricht mit dem Unterschied, dass das zweite Restsignal R2(t) eine höhere Aktualisierungsrate und somit eine höhere Anzahl an Datenwerten aufweist; der Verlauf als solcher ist jedoch unverändert.

Das zweite Restsignal R2(t) gelangt zu einem Addierer 150, der das zweite Restsignal R2(t) mit einem zweiten stufenförmigen Hilfssignal H2(t) addiert.

Das zweite stufenförmige Hilfssignal H2 wird von einem zweiten Signalgenerator 160 erzeugt, der mit dem zweiten Aktualisierungstakt f2, mit dem auch das Aktualisierungsratenwandelelement 140 arbeitet, beaufschlagt ist. Der zweite Signalgenerator 160 erzeugt auf der Basis des Aktualisierungstakts f2 und der Modellparameter A1, A3, φ1 und φ3 als zweites stufenförmiges Hilfssignal ein Summensignal, das aus der von der Analyseeinrichtung 110 ermittelten Grundschwingung und der dritten Oberschwingung zusammengesetzt ist gemäß:

$$H2(t) = A1 \sin(\omega t + \varphi1) + A3 \sin(3\omega t + \varphi3)$$

wobei die Aktualisierungszeitpunkte beim zweiten stufenförmigen Hilfssignal R2(t) dem zweiten Aktualisierungstakt f2 entsprechen. Der Verlauf des zweiten Hilfssignals H2 ist ebenfalls in der Figur 4 dargestellt. Es lässt sich erkennen, dass das zweite stufenförmige Hilfssignal H2(t) zu den Zeitpunkten t10, t11, t12, t13, t14, t20 usw. aktualisiert wird und somit feinstufiger ausgestaltet ist als das erste stufenförmige Hilfssignal H1(t) des ersten Signalgenerators 120.

Das Ausgangssignal des Addierers 150 bildet den verdichteten Ausgangsdatenstrom Sa, der ausgangsseitig am Ausgang A10 der Steuereinrichtung 10 ausgegeben wird und zur Ansteuerung der elektrischen Einrichtung 20 dient.

Die Figur 2 zeigt das Ausgangssignal des Addierers 150 bzw. den Ausgangsdatenstrom Sa mit den verdichteten Ausgangssollwerten Ua näher im Detail. Es lässt sich erkennen, dass der Ausgangsdatenstrom Sa mehrstufiger bzw. vielstufiger ist als der Eingangsdatenstrom Se und somit eine zeitlich höher aufgelöste Ansteuerung der elektrischen Einrichtung 20 ermöglicht als der Eingangsdatenstrom Se. Die "hinzugefügten" Ausgangssollwerte basieren anschaulich beschrieben auf der Annahme, dass der Verlauf der Eingangssollwerte Ue weitgehend einem Summensignal aus Grundschwingung und der dritten Oberschwingung entspricht.

Der zweite Aktualisierungstakt f2 ist vorzugsweise ein ganzzahliges Vielfaches des ersten Aktualisierungstakts f1; in diesem Falle wird in vorteilhafter Weise erreicht, dass im Rahmen der Bildung des Ausgangsdatenstroms Sa zwischen zwei aufeinander folgenden Eingangssollwerten Ue des Eingangsdatenstroms Se jeweils mindestens ein Zusatzsollwert eingefügt wird (siehe z. B. zwischen Ue(t10) und Ue(t20) vier Zusatzsollwerte Ua(t11), Ua(t12), Ua(t13), Ua(t14) in der Figur 2).

Bei dem Ausführungsbeispiel gemäß Figur 1 sind die Steuereinrichtung 10 und die anzusteuernde elektrische Einheit 20 separate Komponenten; alternativ kann vorgesehen sein, dass die Steuereinrichtung 10 einen Bestandteil der anzusteuernden elektrischen Einrichtung bildet.

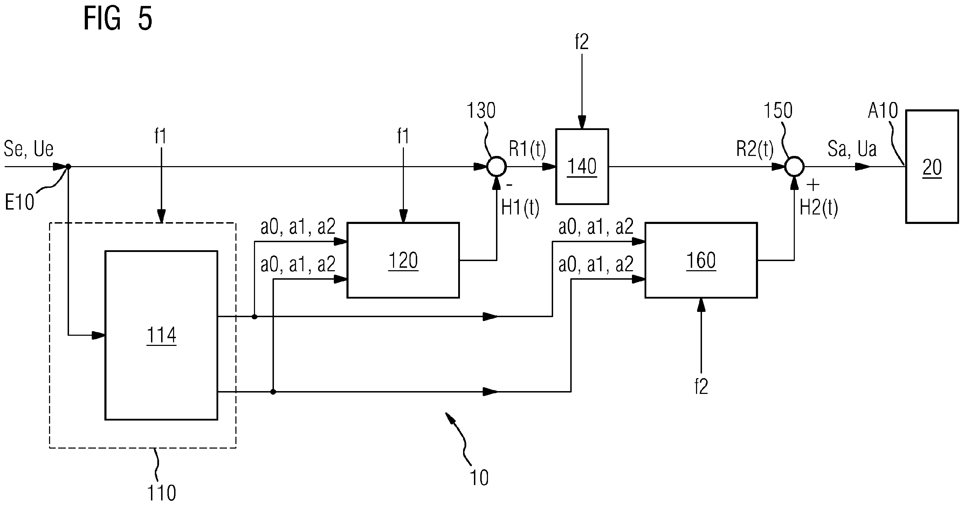

Die Figur 5 zeigt ein zweites Ausführungsbeispiel für eine Steuereinrichtung 10, die zur Ansteuerung einer elektrischen Einrichtung 20 geeignet ist. Die Steuereinrichtung 10 gemäß Figur 5 entspricht von ihrem prinzipiellen Aufbau her der Steuereinrichtung 10 gemäß Figur 1. So weist auch die Steuereinrichtung 10 gemäß Figur 5 einen ersten Signalgenerator 120, einen Subtrahierer 130, ein Aktualisierungsratenwandelelement 140, einen Addierer 150 sowie einen zweiten Signalgenerator 160 auf. Der Unterschied zwischen der Steuereinrichtung 10 gemäß Figur 1 und der Steuereinrichtung 10 gemäß Figur 5 besteht in der konkreten Ausgestaltung der Analyseeinrichtung 110 und in dem Signalmodell, das die beiden Signalgeneratoren 120 und 160 nutzen.

Bei der Ausführungsvariante gemäß Figur 5 basiert die Analyseeinrichtung 110 auf einem anderen Signalmodell, nämlich einem Signalmodell auf der Basis von Polynomkoeffizienten. Das Signalmodell Um lautet bei dem Ausführungsbeispiel gemäß Figur 5 wie folgt:

$$Um(t) = a0 + a1\ t + a2\ t^2$$

wobei a0, a1 und a2 die Modellparameter des Signalmodells Um(t) bezeichnen. Die Variable t bezeichnet die Zeit bzw. den jeweiligen Auswertungszeitpunkt der Analyseeinrichtung 110. Das Signalmodell Um(t) ist in einem Polynomkoeffizientenmodul 114 integriert.

Die Steuereinrichtung 10 gemäß Figur 5 arbeitet im Wesentlichen genauso wie die Steuereinrichtung 10 gemäß Figur 1, so dass auf die obigen Erläuterungen im Zusammenhang mit der Figur 1 bis 4 Bezug genommen werden kann. Die von der Analyseeinrichtung 110 ausgangsseitig ausgegebenen Modellparameter a0, a1 und a2 gelangen zu dem ersten Signalgenerator 120, der auf der Basis der Modellparameter, dem Signalmodell Um(t) sowie dem ersten Aktualisierungstakt f1 das erste stufenförmige Hilfssignal H1(t) erzeugt.

Das erste stufenförmige Hilfssignal H1(t) und die Eingangssollwerte Ue werden mittels des Subtrahierers 130 voneinander subtrahiert, wodurch ausgangsseitig das erste Restsignal R1(t) erzeugt wird.

Mit dem ersten Restsignal R1(t) erzeugt das Aktualisierungsratenwandelelement 140 das zweite Restsignal R2(t), dessen Ausgangssignal mittels des Addierers 150 mit dem zweiten stufenförmigen Hilfssignal H2(t) des zweiten Signalgenerators 160 addiert wird.

Das zweite stufenförmige Hilfssignal H2(t) wird von dem zweiten Signalgenerator 160 auf der Basis der Modellparameter a0, a1 und a2, dem Signalmodell Um(t) sowie dem zweiten Aktualisierungstakt f2 erzeugt.

Die am Ausgang des Addierers 150 und damit am Ausgang A10 der Steuereinrichtung 10 ausgegebenen Ausgangssollwerte Ua gelangen zur elektrischen Einrichtung 20.

Zusammengefasst entspricht die Steuereinrichtung 10 gemäß Figur 5 der Steuereinrichtung 10 gemäß den Figuren 1 bis 4 mit dem Unterschied, dass die Analyseeinrichtung 110 sowie die Signalgeneratoren 120 und 160 ein anderes Signalmodell und damit andere Modellparameter heranziehen; im Übrigen entsprechen sich die Steuereinrichtungen 10 gemäß Figur 1 und 5.

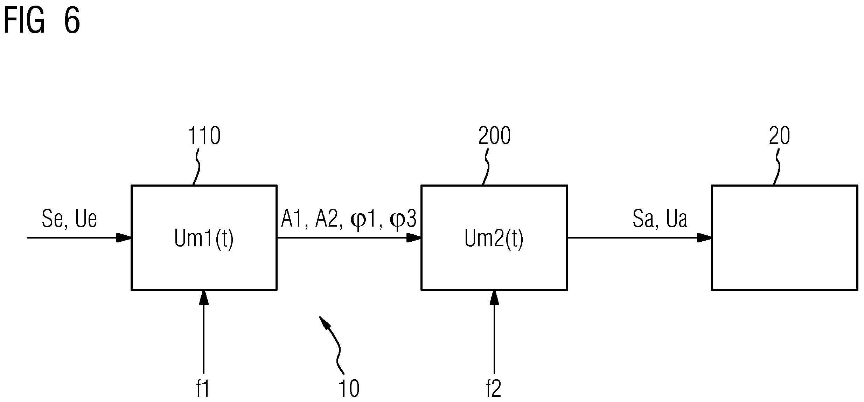

Die Figur 6 zeigt ein weiteres Ausführungsbeispiel für eine Steuereinrichtung 10, die zur Ansteuerung einer elektrischen Einrichtung 20 geeignet ist.

Die Steuereinrichtung 10 gemäß Figur 6 weist eine Analyseeinrichtung 110 auf, die auf einem vorgegebenen ersten Signalmodell Um1(t) basiert. Das erste Signalmodell Um1(t) ist vorzugsweise mit dem Signalmodell gemäß den Figuren 1 bis 4 identisch und erzeugt ausgangsseitig die bereits oben erläuterten Modellparameter A1, φ1, A3 und φ3:

$$Um1(t) = A1\ sin(\omega\ t + \varphi1) + A3\ sin(3\omega\ t + \varphi3)$$

Die Modellparameter werden mit einem ersten Aktualisierungstakt f1, der dem Aktualisierungstakt der Eingangssollwerte Ue entspricht, erzeugt und gelangen zu einem Signalgenerator 200, der auf der Basis der Modellparameter des ersten Signalmodells Um1(t), auf der Basis eines zweiten Signalmodells Um2(t) und einem zweiten Aktualisierungstakt f2, der höher als der erste Aktualisierungstakt f1 ist, die Ausgangssollwerte Ua bzw. den Ausgangsdatenstrom Sa bildet. Das zweite Signalmodell Um2(t) lautet vorzugsweise wie folgt:

$$Um2(t) = dUm1(t)/dt = A1\ \omega\ \cos(\omega\ t + \varphi1) + 3\omega\ A3\ \cos(3\omega\ t + \varphi3)$$

Das zweite Signalmodell Um2(t) beschreibt somit die zeitliche Ableitung des Signalmodells Um1(t) der Analyseeinrichtung 110.

Der zweite Signalgenerator 200 erzeugt ausgangsseitig die Ausgangssollwerte Ua gemäß dem zweiten Aktualisierungstakt f2 und damit wie folgt:

$$Ua = A1\ \omega\ \cos(\omega\ t + \varphi1) + 3\omega\ A3\ \cos(3\omega\ t + \varphi3)$$

Die Ausgangssollwerte Ua entsprechen somit der zeitlichen Ableitung der Eingangssollwerte Ue nach der Zeit t, wobei die Aktualisierungsrate vergrößert ist, weil der zweite Aktualisierungstakt f2 größer als der erste Aktualisierungstakt f1 ist.

Die im Zusammenhang mit den Figuren 1 bis 6 beschriebenen Datenverdichtungsverfahren weisen den Vorteil auf, dass sich der verdichtete Ausgangsdatenstrom Sa ohne bzw. ohne relevante zeitliche Verzögerung des Eingangsdatenstroms Se bzw. der Eingangssollwerte Ue erzeugen lässt. Auch lässt sich eine hohe Aktualisierungsrate bzw. ein hoher Aktualisierungstakt f2 einstellen, ohne dass dadurch ein unerwünschtes Anheben von Rauschanteilen auftritt.

Die Figur 7 zeigt ein Ausführungsbeispiel für eine elektrische Einrichtung 20, die von den Steuereinrichtungen 10 gemäß den Figuren 1 bis 6 angesteuert werden kann. Bei der elektrischen Einrichtung 20 handelt es sich um einen dreiphasigen modularen Multilevelumrichter. Dieser umfasst Wechselspannungsanschlüsse W10 zum Einspeisen oder zur Entnahme von Wechselstrom. Darüber hinaus ist er mit einer Gleichspannungsseite G10 ausgestattet, die zwei Gleichspannungsanschlüsse G10a und G10b umfasst, über die Gleichstrom eingespeist oder entnommen werden kann.

Der Multilevelumrichter weist drei parallel geschaltete Reihenschaltungen R1, R2 und R3 auf, deren äußere Anschlüsse R11, R21 und R31 mit dem Gleichspannungsanschluss G10a in Verbindung stehen. Die äußeren Anschlüsse R12, R22 und R32 stehen mit dem Gleichspannungsanschluss G10b der Gleichspannungsseite G10 in Verbindung. Die äußeren Anschlüsse der drei Reihenschaltungen R1, R2 und R3 bilden die Gleichspannungsseite G10 des Multilevelumrichters 10.

Jede der drei Reihenschaltungen R1, R2 und R3 umfasst zwei Konvertermodule KM mit beispielsweise drei oder mehr in Reihe geschalteten Submodulen SM sowie einer Induktivität L. Jeweils zwischen zwei Induktivitäten L befindet sich ein Zwischenanschluss Z, der einen der drei Wechselspannungsanschlüsse W10 des Multilevelumrichters bildet.

Die Submodule SM weisen jeweils mindestens zwei Schalter und einen Energiespeicher auf. Die Ansteuerung der Submodule SM der Konvertermodule KM erfolgt konverterindividuell jeweils anhand der Ausgangssollwerte Ua eines konverterindividuell zugeordneten Ausgangsdatenstroms Sa, dessen Bildung oben beispielhaft im Zusammenhang mit den Figuren 1 bis 6 erläutert wurde.

Vorzugsweise wird bei jedem der Konvertermodule KM jeweils die Spannung am Konvertermodul unter Bildung von Spannungsistwerten ermittelt. Die Spannungsistwerte werden mit den jeweiligen Spannungssollwerten, die durch die Ausgangssollwerte Ua des zugeordneten Ausgangsdatenstroms Sa konverterindividuell vorgegeben werden, verglichen. Wenn ein in Abhängigkeit von den Differenzwerten zwischen den Spannungsistwerten und den Spannungssollwerten gebildeter Spannungsabweichungswert einen vorgegebenen Schwellenwert erreicht oder überschreitet, werden ein oder mehrere der Schalter der Submodule SM des jeweiligen Konvertermoduls KM umgeschaltet, um zu erreichen, dass die Spannungsistwerte den Spannungssollwerten bestmöglich entsprechen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

1        Steuereinrichtung
10       Steuereinrichtung

**EP 3 566 296 B1**

| | |
|---|---|
| 20 | elektrische Einrichtung |
| 110 | Analyseeinrichtung |
| 111 | Grundschwingungsbestimmungsmodul |
| 112 | Oberschwingungsbestimmungsmodul |
| 114 | Polynomkoeffizientenmodul |
| 120 | Signalgenerator |
| 130 | Subtrahierer |
| 140 | Aktualisierungsratenwandelelement |
| 150 | Addierer |
| 160 | Signalgenerator |
| 200 | Signalgenerator |

| | |
|---|---|
| a0 | Modellparameter |
| a1 | Modellparameter |
| a2 | Modellparameter |
| A1 | Amplitude |
| A3 | Amplitude |
| A10 | Ausgang |
| E10 | Eingang |
| f1 | Aktualisierungstakt |
| f2 | Aktualisierungstakt |
| H1 | Hilfssignal |
| H2 | Hilfssignal |
| R1 | Restsignal |
| R2 | Restsignal |
| Sa | Ausgangsdatenstrom |
| Se | Eingangsdatenstrom |
| t | Variable / Zeit |
| t10 | Zeitpunkt |
| t11 | Zeitpunkt |
| t12 | Zeitpunkt |
| t13 | Zeitpunkt |
| t14 | Zeitpunkt |
| t20 | Zeitpunkt |
| t30 | Zeitpunkt |
| t40 | Zeitpunkt |
| t50 | Zeitpunkt |
| t60 | Zeitpunkt |
| t70 | Zeitpunkt |
| Ua | Ausgangssollwert |
| Ue | Eingangssollwert |
| Um(t) | Signalmodell |
| Um(t1) | Signalmodell |
| Um(t2) | Signalmodul |

| | |
|---|---|
| $\varphi 1$ | Phasenlage |
| $\varphi 3$ | Phasenlage |

| | |
|---|---|
| G10 | Gleichspannungsseite |
| G10a | Gleichspannungsanschluss |
| G10b | Gleichspannungsanschluss |
| K | Konvertermodul |
| L | Induktivität |
| R1 | Reihenschaltung |
| R2 | Reihenschaltung |
| R3 | Reihenschaltung |
| R11 | äußerer Anschluss |
| R12 | äußerer Anschluss |

8

R21      äußerer Anschluss
R22      äußerer Anschluss
R31      äußerer Anschluss
R32      äußerer Anschluss
SM      Submodul
W10      Wechselspannungsanschluss
Z      Zwischenanschluss

**Patentansprüche**

1. Verfahren zum Betreiben einer elektrischen Einrichtung (20) unter Berücksichtigung eines durch Eingangssollwerte (Ue) gebildeten Eingangsdatenstroms (Se), dessen Eingangssollwerte (Ue) eine zeitliche Aktualisierungsrate (f1) aufweisen, wobei

    - mit dem Eingangsdatenstrom (Se) ein verdichteter Ausgangsdatenstrom (Sa) gebildet wird, dessen zeitliche Aktualisierungsrate (f2) an Ausgangssollwerten (Ua) größer als die zeitliche Aktualisierungsrate (f1) des Eingangsdatenstroms (Se) ist, und
    - die Ansteuerung von Komponenten der Einrichtung (20) in Abhängigkeit von den Ausgangssollwerten (Ua) des Ausgangsdatenstroms (Sa) erfolgt,
    **dadurch gekennzeichnet, dass**
    - anhand des Eingangsdatenstroms (Se) von einem vorgegebenen, auf einem oder mehreren Modelparametern basierenden und den Eingangsdatenstrom (Se) nachbildenden Signalmodell die Modellparameter quantitativ ermittelt werden,
    - auf der Basis der ermittelten Modellparameter und des Signalmodells ein erstes stufenförmiges Hilfssignal (H1(t)) ermittelt wird, dessen Stufenrate der Aktualisierungsrate (f1) des Eingangsdatenstroms (Se) entspricht,
    - auf der Basis der ermittelten Modellparameter und des Signalmodells ein zweites stufenförmiges Hilfssignal (H2(t)) ermittelt wird, dessen Stufenrate der Aktualisierungsrate (f2) des verdichteten Ausgangsdatenstroms (Sa) entspricht, und
    - der verdichtete Ausgangsdatenstrom (Sa) unter Heranziehung des Eingangsdatenstroms (Se) sowie des ersten und zweiten Hilfssignals (H1(t), H2(t)) erzeugt wird.

2. Verfahren nach Anspruch 1,
    **dadurch gekennzeichnet, dass** im Rahmen der Bildung des Ausgangsdatenstroms (Sa) zwischen zwei aufeinander folgenden Eingangssollwerten (Ue) des Eingangsdatenstroms (Se) jeweils mindestens ein Zusatzsollwert eingefügt wird.

3. Verfahren nach einem der voranstehenden Ansprüche,
    **dadurch gekennzeichnet, dass** die Zusatzwerte mit den Eingangssollwerten (Ue) unter Einbezug eines Extrapolations- und/oder Prädiktionsverfahrens gebildet werden.

4. Verfahren nach einem der voranstehenden Ansprüche,
    **dadurch gekennzeichnet, dass**

    - als elektrische Einrichtung (20) ein modularer Multilevelumrichter betrieben wird, der mindestens ein Konvertermodul (KM) mit elektrisch in Reihe geschalteten Submodulen (SM) aufweist, wobei jedes Submodul (SM) jeweils mindestens zwei Schalter und einen Energiespeicher umfasst, und
    - die Ansteuerung der Submodule (SM) des mindestens einen Konvertermoduls (KM) anhand der Ausgangssollwerte (Ua) des Ausgangsdatenstroms (Sa) erfolgt.

5. Verfahren nach Anspruch 4,
    **dadurch gekennzeichnet, dass**

    - die Ausgangssollwerte (Ua) des Ausgangsdatenstroms (Sa) Spannungssollwerte sind,
    - die Spannung an dem mindestens einen Konvertermodul (KM) unter Bildung von Spannungsistwerten ermittelt wird,
    - die Spannungsistwerte mit den Spannungssollwerten verglichen werden und
    - zumindest einer der Schalter der Submodule (SM) umgeschaltet wird, wenn die Spannungsistwerte von den Spannungssollwerten über ein vorgegebenes Maß hinaus abweichen.

6. Verfahren nach einem der voranstehenden Ansprüche,
**dadurch gekennzeichnet, dass** die Zusatzsollwerte jeweils in Abhängigkeit von einer vorgegebenen Anzahl an zeitlich vorherigen Eingangssollwerten (Ue) des Eingangsdatenstroms (Se) gebildet werden.

7. Verfahren nach einem der voranstehenden Ansprüche,
**dadurch gekennzeichnet, dass**

- aus dem Eingangsdatenstrom (Se) die Grundschwingung sowie zumindest eine Oberschwingung ermittelt werden und
- die Zusatzsollwerte in Abhängigkeit von der Amplitude (A1, A3) und Phasenlage ($\varphi$1, $\varphi$3) der Grundschwingung und der mindestens einen Oberschwingung gebildet werden.

8. Verfahren nach Anspruch 7,
**dadurch gekennzeichnet, dass** die Zusatzsollwerte in Abhängigkeit von der Amplitude (A1, A3) und Phasenlage ($\varphi$1, $\varphi$3) der Grundschwingung und der dritten Harmonischen gebildet werden.

9. Verfahren nach einem der voranstehenden Ansprüche,
**dadurch gekennzeichnet, dass**

- aus dem Eingangsdatenstrom (Se) Polynomkoeffizienten (a0, a1, a2) eines vorgegebenen Polynoms errechnet werden und
- die Zusatzsollwerte in Abhängigkeit von den Polynomkoeffizienten (a0, a1, a2) gebildet werden.

10. Verfahren nach einem der voranstehenden Ansprüche,
**dadurch gekennzeichnet, dass**

- von den Eingangssollwerten (Ue) des Eingangsdatenstroms (Se) jeweils ein zeitlich korrespondierender Hilfswert des ersten stufenförmigen Hilfssignals (H1(t)) unter Bildung eines ersten Restsignals (R1(t)), dessen Restwertrate der Aktualisierungsrate (f1) des Eingangsdatenstrom (Se) entspricht, abgezogen wird,
- mit dem ersten Restsignal (R1(t)) durch Datenratenwandlung ein zweites Restsignal (R2(t)) gebildet wird, dessen Restwertrate der Aktualisierungsrate (f2) des verdichteten Ausgangsdatenstroms (Sa) entspricht,
- zu den Restwerten des zweiten Restsignals (R2(t)) jeweils ein zeitlich korrespondierender Hilfswert des zweiten stufenförmigen Hilfssignals (H2(t)) unter Bildung der Ausgangssollwerte (Ua) des verdichteten Ausgangsdatenstroms (Sa) addiert wird.

11. Verfahren nach einem der voranstehenden Ansprüche,
**dadurch gekennzeichnet, dass**

- anhand des Eingangsdatenstroms (Se) von einem vorgegebenen, auf einem oder mehreren Modelparametern basierenden ersten Signalmodell (Um1(t)) die Modellparameter quantitativ ermittelt werden und
- auf der Basis der ermittelten Modellparameter, eines modifizierten zweiten Signalmodells (Um2(t)), das der zeitlichen Ableitung des ersten Signalmodells entspricht und die ermittelten Modellparameter des ersten Signalmodells (Um1(t)) nutzt, der verdichtete Ausgangsdatenstrom (Sa) gebildet wird.

12. Verfahren nach Anspruch 11,
**dadurch gekennzeichnet, dass**

- das erste Signalmodell (Um1(t)) als Modellparameter die Amplitude (A1, A3) und Phasenlage ($\varphi$1, $\varphi$3) der Grundschwingung und mindestens einer Oberschwingung des Eingangsdatenstroms (Se) aufweist und ein aus der Grundschwingung und der mindestens einen Oberschwingung gebildetes Summensignal beschreibt und
- das zweite Signalmodell (Um2(t)) die zeitliche Ableitung des Summensignals beschreibt.

13. Verfahren nach Anspruch 12,
**dadurch gekennzeichnet, dass** das erste Signalmodell (Um1(t)) als Modellparameter die Amplitude (A1, A3) und Phasenlage ($\varphi$1, $\varphi$3) der Grundschwingung und der dritten Oberschwingung des Eingangsdatenstroms (Se) aufweist und ein aus der Grundschwingung und der dritten Oberschwingung gebildetes Summensignal beschreibt.

**14.** Steuereinrichtung (10) zum Steuern einer elektrischen Einrichtung (20) unter Berücksichtigung eines durch Eingangssollwerte (Ue) gebildeten Eingangsdatenstroms (Se), dessen Eingangssollwerte (Ue) eine zeitliche Aktualisierungsrate (f1) aufweisen, wobei

die Steuereinrichtung (10) derart ausgestaltet ist, dass sie mit dem Eingangsdatenstrom (Se) einen verdichteten Ausgangsdatenstrom (Sa) bildet, dessen zeitliche Aktualisierungsrate (f2) an Ausgangssollwerten (Ua) größer als die zeitliche Aktualisierungsrate (f1) des Eingangsdatenstroms (Se) ist, und die Ansteuerung von Komponenten der Einrichtung (20) in Abhängigkeit von den Ausgangssollwerten (Ua) des Ausgangsdatenstroms (Sa) durchführt, **dadurch gekennzeichnet, dass** die Steuereinrichtung (10) derart ausgestaltet ist, dass sie

- anhand des Eingangsdatenstroms (Se) von einem vorgegebenen, auf einem oder mehreren Modelparametern basierenden und den Eingangsdatenstrom (Se) nachbildenden Signalmodell die Modellparameter quantitativ ermittelt,
- auf der Basis der ermittelten Modellparameter und des Signalmodells ein erstes stufenförmiges Hilfssignal (H1(t)) ermittelt, dessen Stufenrate der Aktualisierungsrate (f1) des Eingangsdatenstroms (Se) entspricht,
- auf der Basis der ermittelten Modellparameter und des Signalmodells ein zweites stufenförmiges Hilfssignal (H2(t)) ermittelt, dessen Stufenrate der Aktualisierungsrate (f2) des verdichteten Ausgangsdatenstroms (Sa) entspricht, und
- den verdichteten Ausgangsdatenstrom (Sa) unter Heranziehung des Eingangsdatenstroms (Se) sowie des ersten und zweiten Hilfssignals (H1(t), H2(t)) erzeugt.

**15.** Multilevelumrichter,
**dadurch gekennzeichnet, dass** dieser mit einer Steuereinrichtung (10) nach Anspruch 14 ausgestattet ist.

**Claims**

**1.** Method for operating an electrical device (20) by taking into consideration an input data stream (Se) that is formed by input setpoint values (Ue), and the input setpoint values (Ue) of which have a temporal update rate (f1), wherein

- the input data stream (Se) is used to form a compressed output data stream (Sa), the temporal update rate (f2) of which for output setpoint values (Ua) is greater than the temporal update rate (f1) of the input data stream (Se), and
- components of the device (20) are actuated on the basis of the output setpoint values (Ua) of the output data stream (Sa),
**characterized in that**
- the input data stream (Se) is used to quantitatively determine the model parameters from a specified signal model, which is based on one or more model parameters and simulates the input data stream (Se),
- the determined model parameters and the signal model are taken as a basis for determining a first stepped auxiliary signal (H1(t)), the step rate of which corresponds to the update rate (f1) of the input data stream (Se),
- the determined model parameters and the signal model are taken as a basis for determining a second stepped auxiliary signal (H2(t)), the step rate of which corresponds to the update rate (f2) of the compressed output data stream (Sa), and
- the compressed output data stream (Sa) is generated by using the input data stream (Se) and the first and second auxiliary signals (H1(t)), H2(t)).

**2.** Method according to Claim 1,
**characterized in that**
during the formation of the output data stream (Sa) at least one additional setpoint value is respectively inserted between two successive input setpoint values (Ue) of the input data stream (Se).

**3.** Method according to either of the preceding claims, **characterized in that**
the additional values are formed with the input setpoint values (Ue) by involving an extrapolation and/or prediction method.

**4.** Method according to one of the preceding claims, **characterized in that**

- the electrical device (20) is operated as a modular multilevel converter that has at least one converter module (KM) having submodules (SM) electrically connected in series, wherein each submodule (SM) respectively has at least two switches and an energy store, and
- the submodules (SM) of the at least one converter module (KN) are actuated on the basis of the output setpoint values (Ua) of the output data stream (Sa).

**5.** Method according to Claim 4,
**characterized in that**

- the output setpoint values (Ua) of the output data stream (Sa) are voltage setpoint values,
- the voltage on the at least one converter module (KM) is determined by forming voltage actual values,
- the voltage actual values are compared with the voltage setpoint values, and
- at least one of the switches of the submodules (SM) is changed over if the voltage actual values differ from the voltage setpoint values beyond a specified measure.

**6.** Method according to one of the preceding claims, **characterized in that**
the additional setpoint values are each formed on the basis of a specified number of chronologically preceding input setpoint values (Ue) of the input data stream (Se).

**7.** Method according to one of the preceding claims, **characterized in that**

- the fundamental and at least one harmonic are determined from the input data stream (Se), and
- the additional setpoint values are formed on the basis of the amplitude (A1, A3) and phase ($\varphi$1, $\varphi$3) of the fundamental and the at least one harmonic.

**8.** Method according to Claim 7,
**characterized in that**
the additional setpoint values are formed on the basis of the amplitude (A1, A3) and phase ($\varphi$1, $\varphi$3) of the fundamental and the third harmonic.

**9.** Method according to one of the preceding claims, **characterized in that**

- polynomial coefficients (a0, a1, a2) of a specified polynomial are calculated from the input data stream (Se), and
- the additional setpoint values are formed on the basis of the polynomial coefficients (a0, a1, a2).

**10.** Method according to one of the preceding claims, **characterized in that**

- a chronologically corresponding auxiliary value of the first stepped auxiliary signal (H1(t)) is deducted from each of the input setpoint values (Ue) of the input data stream (Se) to form a first residual signal (R1(t)), the residual value rate of which corresponds to the update rate (f1) of the input data stream (Se),
- the first residual signal (R1(t)) is used to form a second residual signal (R2(t)), the residual value rate of which corresponds to the update rate (f2) of the compressed output data stream (Sa), by means of data rate conversion,
- a chronologically corresponding auxiliary value of the second stepped auxiliary signal (H2(t)) is added to each of the residual values of the second residual signal (R2(t)) to form the output setpoint values (Ua) of the compressed output data stream (Sa).

**11.** Method according to one of the preceding claims, **characterized in that**

- the input data stream (Se) is used to quantitatively determine the model parameters from a specified first signal model (Um1(t)), which is based on one or more model parameters, and
- the determined model parameters and a modified second signal model (Um2(t)), which corresponds to the temporal derivative of the first signal model and uses the determined model parameters of the first signal model (Um1(t)), are taken as a basis for forming the compressed output data stream (Sa).

**12.** Method according to Claim 11,
**characterized in that**

- the first signal model (Um1(t)) has the amplitude (A1, A3) and phase ($\varphi$1, $\varphi$3) of the fundamental and at least one harmonic of the input data stream (Se) as model parameters and describes a summed signal formed from the fundamental and the at least one harmonic, and

- the second signal model (Um2(t)) describes the temporal derivative of the summed signal.

13. Method according to Claim 12,
**characterized in that**
the first signal model (Um1(t)) has the amplitude (A1, A3) and phase ($\varphi$1, $\varphi$3) of the fundamental and the third harmonic of the input data stream (Se) as model parameters and describes a summed signal formed from the fundamental and the third harmonic.

14. Control device (10) for controlling an electrical device (20) by taking into consideration an input data stream (Se) that is formed by input setpoint values (Ue), and the input setpoint values (Ue) of which have a temporal update rate (f1), wherein
the control device (10) is configured such that it uses the input data stream (Se) to form a compressed output data stream (Sa), the temporal update rate (f2) of which for output setpoint values (Ua) is greater than the temporal update rate (f1) of the input data stream (Se), and actuates components of the device (20) on the basis of the output setpoint values (Ua) of the output data stream (Sa),
**characterized in that** the control device (10) is configured such that it

- uses the input data stream (Se) to quantitatively determine the model parameters from a specified signal model, which is based on one or more model parameters and simulates the input data stream (Se),
- takes the determined model parameters and the signal model as a basis for determining a first stepped auxiliary signal (H1(t)), the step rate of which corresponds to the update rate (f1) of the input data stream (Se),
- takes the determined model parameters and the signal model as a basis for determining a second stepped auxiliary signal (H2(t)), the step rate of which corresponds to the update rate (f2) of the compressed output data stream (Sa), and
- generates the compressed output data stream (Sa) by using the input data stream (Se) and the first and second auxiliary signals (H1(t)), H2(t)).

15. Multilevel converter,
**characterized in that**
it is equipped with a control device (10) according to Claim 14.

## Revendications

1. Procédé pour faire fonctionner un dispositif (20) électrique en tenant compte d'un flux (Se) de données d'entrée formé par des valeurs (Ue) de consigne d'entrée, dont les valeurs (Ue) de consigne d'entrée ont un taux (f1) de mise à jour dans le temps, dans lequel

- on forme, par le flux (Se) de données d'entrée, un flux (Sa) de données de sortie comprimé, dont le taux (f2) de mise à jour dans le temps des valeurs (Ua) de consigne de sortie est plus grand que le taux (f1) de mise à jour dans le temps du flux (Se) de données d'entrée, et
- la commande de composants du dispositif (20) s'effectue en fonction des valeurs (Ua) de consigne de sortie du flux (Sa) de données de sortie,
**caractérisé en ce que**
- à l'aide du flux (Se) de données d'entrée, on détermine quantitativement les paramètres de modèle d'un modèle de signal donné à l'avance, reposant sur un ou sur plusieurs paramètres de modèle et reproduisant le flux (Se) de données d'entrée,
- sur la base des paramètres de modèle déterminés et du modèle de signal, on détermine un premier signal (H1(t)) auxiliaire en palier, dont le taux de palier correspond au taux (f1) de mise à jour du flux (Se) de données d'entrée,
- sur la base des paramètres de modèle déterminés et du modèle de signal, on détermine un deuxième signal (H2(t)) auxiliaire en palier, dont le taux de palier correspond au taux (f2) de mise à jour du flux (Sa) de données de sortie comprimé, et
- on produit le flux (Sa) de données de sortie comprimé en tirant parti du flux (Se) de données d'entrée, ainsi que du premier et du deuxième signal (H1(t), H2(t)) auxiliaire.

2. Procédé suivant la revendication 1,
**caractérisé en ce que**,

dans le cadre de la formation du flux (Sa) de données de sortie, on insère, respectivement, au moins une valeur de consigne supplémentaire entre deux valeurs (Ue) de consigne d'entrée successives du flux (Se) de données d'entrée.

3. Procédé suivant l'une des revendications précédentes, **caractérisé en ce que**
l'on forme les valeurs supplémentaires avec les valeurs (Ue) de consigne d'entrée, en incorporant un procédé d'extrapolation et/ou de prédiction.

4. Procédé suivant l'une des revendications précédentes, **caractérisé en ce que**

- l'on fait fonctionner, comme dispositif (20) électrique, un onduleur modulaire à plusieurs niveaux, qui a au moins un module (KM) de convertisseur ayant des sous-modules (SM) montés électriquement en série, chaque sous-module (SM) comprenant, respectivement, au moins deux interrupteurs et un accumulateur d'énergie, et
- la commande des sous-modules (SM) du au moins un module (KM) de convertisseur s'effectue à l'aide des valeurs (Ua) de consigne de sortie du flux (Sa) de données de sortie.

5. Procédé suivant la revendication 4,
**caractérisé en ce que**

- les valeurs (Ua) de consigne de sortie du flux (Sa) de données de sortie sont des valeurs de consigne de tension,
- on détermine la tension aux bornes du au moins un module (KM) de convertisseur, en formant des valeurs réelles de tension,
- on compare les valeurs réelles de tension aux valeurs de consigne de tension et
- on inverse au moins l'un des interrupteurs des sous-modules (SM), si les valeurs réelles de tension s'écartent, dans une mesure donnée à l'avance, des valeurs de consigne de tension.

6. Procédé suivant l'une des revendications précédentes, **caractérisé en ce que**
l'on forme les valeurs de consigne supplémentaires, respectivement, en fonction d'un nombre donné à l'avance de valeurs (Ue) de consigne d'entrée précédentes dans le temps du flux (Se) de donnée d'entrée.

7. Procédé suivant l'une des revendications précédentes, **caractérisé en ce que**

- on détermine, à partir du flux (Se) de données d'entrée, l'oscillation fondamentale, ainsi qu'au moins un harmonique et
- on forme des valeurs de consigne supplémentaires en fonction de l'amplitude (A1, A3) et de la position ($\varphi$1, $\varphi$3) en phase de l'oscillation fondamentale et du au moins un harmonique.

8. Procédé suivant la revendication 7,
**caractérisé en ce que**
l'on forme des valeurs de consigne supplémentaires en fonction de l'amplitude (A1, A3) et de la position ($\varphi$1, $\varphi$3) en phase de l'oscillation fondamentale et du troisième harmonique.

9. Procédé suivant l'une des revendications précédentes, **caractérisé en ce que**

- on calcule, à partir du flux (Se) de données d'entrée, des coefficients (a0, a1, a2) d'un polynôme donné à l'avance et
- on forme les valeurs de consigne supplémentaires en fonction des coefficients (a0, a1, a2) du polynôme.

10. Procédé suivant l'une des revendications précédentes, **caractérisé en ce que**

- on retranche, des valeurs (Ue) de consigne d'entrée du flux (Se) de données d'entrée, respectivement, une valeur auxiliaire correspondante dans le temps du premier signal (H1(t)) auxiliaire en palier, en formant un premier signal (R1(t)) restant, dont le taux de valeurs restantes correspond au taux (f1) de mise à jour du flux (Se) de données d'entrée,
- par le premier signal (R1(t)) restant, on forme, par transformation de taux de données, un deuxième signal (R2(t)) restant, dont le taux de valeurs restantes correspond au taux (f2) de mise à jour du flux (Sa) de données de sortie comprimé,
- aux valeurs restantes du deuxième signal (R2(t)) restant, on ajoute, respectivement, une valeur auxiliaire correspondante dans le temps du deuxième signal (H2(t)) auxiliaire en palier, en formant les valeurs (Ua) de consigne de sortie du flux (Sa) de données de sortie comprimé.

**11.** Procédé suivant l'une des revendications précédentes, **caractérisé en ce que**

- à l'aide du flux (Se) de données d'entrée, on détermine quantitativement les paramètres de modèle d'un premier modèle (Um1(t)) de signal donné à l'avance et reposant sur un ou sur plusieurs paramètres de modèle et
- sur la base des paramètres de modèle déterminés d'un deuxième modèle (Um2(t)) de signal modifié, qui correspond à la dérivée en fonction du temps du premier modèle de signal et qui utilise les paramètres de modèle déterminés du premier modèle (Um1(t)) de signal, on forme le flux (Sa) de données de sortie comprimé.

**12.** Procédé suivant la revendication 11,
**caractérisé en ce que**

- le premier modèle (Um1(t)) de signal a, comme paramètres de modèle, les amplitudes (A1, A3) et les positions (φ1, φ3) en phase de l'oscillation fondamentale et d'au moins un harmonique du flux (Se) de données d'entrée et décrit un signal somme formé à partir de l'oscillation fondamentale et du au moins un harmonique et
- le deuxième modèle (Um2(t)) de signal décrit la dérivée en fonction du temps du signal somme.

**13.** Procédé suivant la revendication 12,
**caractérisé en ce que**
le premier modèle (Um1(t) ) de signal a, comme paramètres de modèle, les amplitudes (A1, A3) et les positions (φ1, φ3) en phase de l'oscillation fondamentale et du troisième harmonique du flux (Se) de données d'entrée et décrit un signal somme formé à partir de l'oscillation fondamentale et du troisième harmonique.

**14.** Dispositif (10) de commande pour commander un dispositif (20) électrique, en tenant compte d'un flux (Se) de données d'entrée formé par des valeurs (Ue) de consigne d'entrée, dont les valeurs (Ue) de consigne d'entrée ont un taux (f1) de mise à jour dans le temps, dans lequel le dispositif (10) de commande est conformé de manière à former, par le courant (Se) de données d'entrée, un courant (Sa) de données de sortie comprimé, dont le taux (f2) de mise à jour dans le temps de valeurs (Ua) de consigne de sortie est plus grand que le taux (f1) de mise à jour dans le temps du flux (Se) de données d'entrée et il effectue la commande de composants du dispositif (20) en fonction des valeurs (Ua) de consigne de sortie du flux (Sa) de données de sortie,
**caractérisé en ce que**
le dispositif (10) de commande est conformé de manière

- à l'aide du flux (Se) de données d'entrée, à déterminer quantitativement les paramètres de modèle d'un modèle de signal donné à l'avance, reposant sur un ou sur plusieurs paramètres de modèle et représentant le flux (Se) de données d'entrée,
- sur la base des paramètres de modèle déterminés et du modèle de signal, à déterminer un premier signal (H1(t)) auxiliaire en palier, dont le taux de palier correspond au taux (f1) de mise à jour du flux (Se) de données d'entrée,
- sur la base des paramètres de modèle déterminés et du modèle de signal, à déterminer un deuxième signal (H2(t)) auxiliaire en palier, dont le taux de palier correspond au taux (f2) de mise à jour du courant (Sa) de données de sortie comprimé, et
- à produire le flux (Sa) de données de sortie comprimé en tirant parti du flux (Se) de données d'entrée, ainsi que du premier et du deuxième signal (H1(t), H2(t)) auxiliaire.

**15.** Onduleur à plusieurs niveaux,
**caractérisé en ce que**
celui-ci est équipé d'un dispositif (10) de commande suivant la revendication 14.

FIG 1

Se, Ue

E10

A10

20

Sa, Ua

R2(t)

150 + H2(t)

160 ← f2

A1, φ1

A3, φ3

140 ← f2

R1(t)

130 − H1(t)

120 ← f1

A1, φ1

A3, φ3

10

f1

111

112

110

FIG 2

Ua

Ue

0

$t_{10}$ $t_{11}$ $t_{12}$ $t_{13}$ $t_{14}$ $t_{20}$ $t_{21}$ $t_{22}$ $t_{23}$ $t_{24}$ $t_{30}$ $t_{31}$ $t_{32}$ $t_{33}$ $t_{34}$ $t_{40}$ $t_{41}$ $t_{42}$ $t_{43}$ $t_{44}$ $t_{50}$ $t_{51}$ $t_{52}$ $t_{53}$ $t_{54}$ $t_{60}$ $t_{61}$ $t_{62}$ $t_{63}$ $t_{64}$ $t_{70}$ $t_{71}$ $t_{72}$ $t_{73}$  t

FIG 3

H1(t)

0

R1(t)

$t_{10}$ $t_{20}$ $t_{30}$ $t_{40}$ $t_{50}$ $t_{60}$ $t_{70}$  t

FIG 4

H2(t)

0

R2(t)

$t_{10}$ $t_{11}$ $t_{12}$ $t_{13}$ $t_{14}$ $t_{20}$ $t_{21}$ $t_{22}$ $t_{23}$ $t_{24}$ $t_{30}$ $t_{31}$ $t_{32}$ $t_{33}$ $t_{34}$ $t_{40}$ $t_{41}$ $t_{42}$ $t_{43}$ $t_{44}$ $t_{50}$ $t_{51}$ $t_{52}$ $t_{53}$ $t_{54}$ $t_{60}$ $t_{61}$ $t_{62}$ $t_{63}$ $t_{64}$ $t_{70}$ $t_{71}$ $t_{72}$ $t_{73}$  t

EP 3 566 296 B1

FIG 5

EP 3 566 296 B1

FIG 6

# FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2908424 A1
- WO 2011150964 A1
- WO 2016082878 A1

**In der Beschreibung aufgeführte Nicht-Patentliteratur**

- **SASCHA KUBERA ; RODRIGO ALVAREZ ; JÖRG DORN.** Control of Switching Frequency for Modular Multilevel Converters by a Variable Hysteresis Band Modulation. *18th European Conference on Power Electronics and Applications EPE'16 ECCE Europe,* 05. September 2016

- Predictive Control of a Three-Level Boost Converter and an NPC Inverter for High-Power PMSG-Based Medium Voltage Wind Energy Conversion Systems. **YARAMASU VENKATA et al.** IEEE Transactions on Power Electronics. Institute of Electrical and Electronics Engineers, 01. Oktober 2014, vol. 29, 5308-5322